## Europäisches Patentamt

## European Patent Office

## Office européen des brevets

(19)

(11) Numéro de publication: **0 032 181**
**B1**

(12)

# FASCICULE DE BREVET EUROPEEN

(45) Date de publication du fascicule du brevet: **20.03.85**

(51) Int. Cl.⁴: **C 09 D 9/00, B 41 J 29/36**

(21) Numéro de dépôt: **80107236.4**

(22) Date de dépôt: **20.11.80**

(54) Elément de correction par soulèvement de caractères imprimés.

(30) Priorité: **20.12.79 US 105475**

(43) Date de publication de la demande:
**22.07.81 Bulletin 81/29**

(45) Mention de la délivrance du brevet:
**20.03.85 Bulletin 85/12**

(84) Etats contractants désignés:
**BE CH DE FR GB IT LI NL**

(56) Documents cités:
**EP-A-0 001 877**
**AU-B- 410 060**
**FR-A-1 171 539**
**FR-A-2 194 570**
**FR-A-2 330 747**
**GB-A-1 096 924**
**US-A-3 321 427**

(73) Titulaire: **International Business Machines Corporation**
**Old Orchard Road**
**Armonk, N.Y. 10504 (US)**

(72) Inventeur: **Creekmore, Fred Morris**
**148 Quebec Way**
**Lexington Kentucky 40503 (US)**
Inventeur: **Kennair, Dorothy Joyce**
**290 Hill-N-Dale**
**Lexington Kentucky 40503 (US)**
Inventeur: **Livingston, Benjamin Franklin**
**3288 Carriage Lane**
**Lexington Kentucky 40502 (US)**
Inventeur: **Sabad, Joseph John**
**3312 Bellefonte Dr.**
**Lexington Kentucky 40502 (US)**

(74) Mandataire: **Siccardi, Louis**
**Compagnie IBM France Département de Propriété Industrielle**
**F-06610 La Gaude (FR)**

Courier Press, Leamington Spa, England.

EP 0032181 B1

**0 032 181**

**Description**

Domaine Technique

La présente invention concerne la composition des matériaux sensibles à la pression et à faible pouvoir collant approprié au retrait de caractères erronés écrits sur un support, ainsi que l'utilisation de tels matériaux. Les matériaux de la présente invention sont plus particulièrement adaptés pour être utilisés en association avec des rubans de machine à écrire du type revêtu d'une encre non absorbante et pratiquement incompressible. Les éléments de correction par soulèvement, sensibles à la pression et à faible pouvoir collant, de la présente invention se présentent de préférence sous la forme d'une bande enroulée sur elle-même et sont plus particulièrement conçus pour être utilisés avec les dispositifs d'alimentation de ruban d'une machine à écrire.

Etat de la Technique Antérieure

Les premiers matériaux utilisés pour corriger des erreurs sur une page imprimée furent les dispositifs d'effacement à gomme. L'encre portée par le ruban de la machine à écrire utilisé à cette époque était absorbée par le papier et les tentatives d'effacement d'un caractère imprimé provoquaient souvent la déchirure du papier portant le caractère erroné. Le développement des matériaux de transfert à encre non absorbante n'humidifiant ou ne colorant pas le papier sur lequel les caractères sont imprimés, a permis le retrait des caractères erronés à l'aide d'un adhésif.

Un procédé bien connu pour corriger des caractères erronés consiste à disposer dans une machine à écrire un ruban adhésif sensible à une opération de frappe et à la pression, pouvant être entraîné par un dispositif d'alimentation lui permettant de remplacer le ruban encreur lors d'une opération de correction. Dans ce type d'opération, l'image erronée est refrappée en utilisant le caractère ou la touche approprié. Le ruban sensible à la pression est maintenu hors de contact avec la feuille d'impression à corriger sauf dans les zones qui adhèrent à l'image erronée, et soulève l'image erronée du substrat lorsque la pression appliquée par l'opération de frappe est supprimée. Puis l'image correcte est imprimée à la place de l'image incorrecte qui a été retirée. Comme indiqué précédemment, ce type d'opération est plus particulièrement utilisé en association avec des rubans encreurs secs et pratiquement exempts d'huile et de colorants dissouts pouvant passer dans le substrat et tacher les fibres du papier.

Bien que ces rubans de correction sensibles à la pression soient d'utilisation courante, ils posent certains problèmes cruciaux. Par exemple, un grand nombre d'entre eux tendent à se coller au ruban de transfert, aux guide-ruban et à l'écran d'impression, ce qui n'est pas souhaitable pour un fonctionnement efficace de la machine à écrire. De plus, apparaissent certains problèmes d'alimentation provoqués par les tensions d'enroulement et de déroulement élevées qui doivent être appliqués aux rubans actuellement disponibles dans le commerce. En outre, en raison du pouvoir adhésif des rubans de correction actuellement connus, des fibres sont quelquefois arrachées du papier pendant l'opération de correction. Les bobines de rubans en se déroulant peuvent également prendre la forme d'un cône ou d'un "télescope" lorsque l'on utilise les rubans de correction par soulèvement actuellement disponibles.

Beaucoup de matériaux actuellement disponibles et suggérés pour la fabrication de ruban sensibles à la pression permettant le retrait de caractères erronés impliquent soit l'utilisation de quantités relativement importantes de matériaux de remplissage inertes à grains fins tel que du dioxyde de titane pour réduire le pouvoir collant à la surface du ruban, soit l'utilisation d'une couche d'adhésif collante combinée à une couche de surface passive déposée sur la couche collante. La couche collante est activée par l'application de la pression de frappe. Les matériaux qui requièrent l'utilisation d'une couche d'adhésif et d'une couche limite passive exigent l'application de procédés de préparation plus élaborés et plus coûteux.

Les matériaux comprenant des quantités importantes de matériaux de remplissage inertes souffrent du fait que les matériaux de remplissage ne transmettent aucune propriété adhésive et, en conséquence, l'efficacité totale du matériau de correction est réduite, le degré de cette réduction dépendant de la quantité relative des matériaux de remplissage utilisée. De plus, il est souvent difficile d'obtenir une dispersion uniforme du matériau de remplissage ce qui peut entraîner des variation considérables d'efficacité du matériau de correction.

Exposé de l'Invention

Les caractéristiques requises d'un élément pouvant être utilisé commercialement pour le retrait des caractères imprimés par erreur dans une machine à écrire et plus particulièrement en association avec un dispositif d'avancement de ruban, sont obtenues par l'équilibrage délicat d'un certain nombre de propriétés critiques. Par exemple, l'élément doit présenter un pouvoir adhésif suffisant pour pouvoir retirer du papier les caractères imprimés par erreur mais insuffisant pour provoquer l'arrachement des fibres du papier ou affecter les opérations d'avancement et de manipulation.

La présente invention permet d'établir la composition d'un élément adhésif a faible pouvoir collant essentiellement homogène et régulier. Les propriétés adhésives des éléments obtenus par les compositions de la présente invention sont telles que ceux-ci présentent un pouvoir collant suffisant pour le retrait de caractères imprimés par erreur lorsque ces matériaux sont frappés avec force sur ces caractères imprimés par erreur tout en n'étant pas collant ou gluant lorsqu'ils sont soumis à une faible

2

# 0 032 181

force. En conséquence, les élément de la présente invention permettent d'éliminer les problèmes d'avancement et de manipulation rencontrés jusqu'à maintenant.

En outre, les éléments de la présente invention ne collent pas fortement à la feuille d'impression et permettent donc un soulèvement efficace des caractères erronés sans arrachement de fibres du papier pendant l'opération de correction. Les éléments de la présente invention permettent le retrait de caractères imprimés par erreur sans endommager les autres images portées par le substrat.

Les propriétés adhésives de l'adhésif de la présente invention sont telles que l'adhésif, lorsqu'il est déposé sur un support film, adhère fortement au support. De plus, il est souhaitable que l'adhésif, lorsque l'élément de soulèvement est une bande enroulée sur elle-même, n'adhère pas fortement au côté arrière du substrat.

Les compositions des éléments de la présente invention permettent à ceux-ci d'être stables en temperature et de résister au vieillissement. Un autre avantage de la présente invention réside dans le fait que les compositions de la présente invention peuvent être appliquées au cours d'une opération effectuée en un seul passage. La composition des éléments adhésifs à faible pouvoir collant de la présente invention ne requière pas l'utilisation de matériaux de remplissage inertes bien que l'on puisse en utiliser si on le désire.

L'élément de correction par soulèvement, adhésif à froid, pour le retrait de caractères imprimés sur un support, selon la présente invention est caractérisé en ce qu'il comporte un substrat dont un côté est revêtu d'un matériau comportant:

a) de 5 à 35% en poids de cire paraffinique ou de résine de polyéthylène, ou d'un mélange de celles-ci,

b) de 20 à 65% en poids d'un polymère collant hydrocarboné,

c) de 7 à 25% en poids d'un polymère d'isobutylène collant à masse moléculaire moyenne viscométrique (formule de Flory) d'au moins 40000, et

d) de 10 à 48% en poids d'un copolymère d'éthylène et/ou de propylène et d'un ester monoéthyléniquement non saturé où le copolymère contient de 18 à 40% en poids de cet d'ester.

Description de Modes de Réalisation de l'Invention

La composition de l'élément sensible à la pression et à faible pouvoir collant de la présente invention comprend de la cire paraffinique et/ou de la résine de polyéthylène. La cire paraffinique fond entre environ 40 et environ 140°C et de préférence au moins autour de 50°C. La cire paraffinique a une densité de l'ordre d'environ 0,86 à environ 0,94 et, de préférence, d'environ 0,91 à environ 0,92 à 25°C. Parmi les cires paraffiniques, on connaît par exemple, la cire de paraffine, la cire microcristalline et les cires de polyoléfine synthétiques telles que les cires de polyéthylène et les cires de polypropylène. Les cires de polyéthylène ont généralement des points de fusion de l'ordre d'environ 85 à environ 130°C et les cires fondues ont une viscosité de 2 à 200 centipoises (2 à 200. $10^{-3}$Pa.S) à 150°C. Des mélanges de cires peuvent être utilisés si on le désire.

La résine de polyéthylène qui peut être utilisée selon les enseignements de la présente invention est une résine qui, de préférence, a un poids moléculaire inférieur à celui des polyéthylènes extrudables et une densité de 0,86 à 0,94 et, en général, un point de ramollissement inférieur à 150°C.

Bien que l'on envisage d'utiliser de la résine de polyéthylène dans la composition des matériaux de la présente invention, on utilise de la cire paraffinique dans la composition des matériaux préférés. Des mélanges de polyéthylène et de cire paraffinique peuvent également être utilisés. Les cires paraffiniques disponibles dans le commerce et appropriées pour entrer dans la composition des matériaux de la présente invention sont, par exemple, les cires Gulf 40, 55 et 75, fabriquées par Gulf Oil. Par exemple, un polyéthylène disponible dans le commerce pourrait être l'Epolène C—16 de Eastman Kodak, qui, selon le fabricant, présente un point de ramollissement de l'ordre de 106°C, une dureté de 3 (sous une charge de 100 grammes pendant 5 secondes à 25°C), une pénétration de 3 mm, une densité de 0,908 à 25°C, une viscosité de 12000 centipoises (12 Pa.S) à 150°C et un poids moléculaire d'approximativement 8000. La cire paraffinique ou la résine de polyéthylène entre dans la composition du matériau pour environ 5 à environ 35% en poids. Lorsque l'on utilise de la cire paraffinique, la quantité préférée à utiliser est d'environ 5 à environ 15% en poids. On croit que la cire et/ou la résine de polyéthylène tendent à abaisser la viscosité de la solution et le pouvoir collant de la surface du matériau.

Les matériaux de la présente invention doivent également comprendre un polymère à pouvoir collant qui leur donnera des propriétés adhésives. On choisira de préférence un polymère hydrocarboné. Les polymères à pouvoir collant utilisés d'une manière préférentielle selon les enseignements de la présente invention sont les polymères de termpène tels que les matériaux polymères comprenant les dimères ainsi que les polymères plus élevés obtenus par polymérisation et/ou copolymérisation d'hydrocarbures de terpène tels que les monoterpènes acycliques, monocycliques et bicycliques et leurs mélanges y compris l'allo-ocimène, le carène, le pinène isomérisé, le pinène, le dipentène, le terpinène, le terpinolène, le limonène, la térébenthine, une fraction de terpène et divers autres terpènes. Les polyterpènes utilisés de préférence selon les enseignements de la présente invention présentent des points de ramollissement pouvant atteindre approximativement 100°C et compris de préférence entre 50 et 65°C. Les polyterpènes sont connus dans le commerce sous les marques "Piccolyte" et "Zonarez", le polyterpène à utiliser de préférence étant le "Piccolyte S— 55".

D'autres résines hydrocarbonées à pouvoir collant peuvent être préparées par la polymérisation de

3

monomères composés principalement d'oléfines et de dioléfines et comprennent, par exemple, les monomères sous-produits résiduels issus de la fabrication de l'isoprène. De telles résines disponibles dans le commerce sont connues sous les marques "Wingtack" fabriquées par Goodyear Tire and Rubber Company et "Stay-Tack" "Nirez" et "Bétaprène H" fabriquées par Reichold Chemical Corporation.

Le polymère à pouvoir collant est utilisé par quantité de l'ordre d'environ 20 à environ 65% et de préférence, de l'ordre d'environ 35 à environ 50% en poids. On peut utiliser, si on le désire, des mélanges de polymères à pouvoir collant.

Un autre élément requis dans la composition du matériau de la présente invention est un polymère d'isobutylène. Le polymère d'isobutylène doit avoir une masse moléculaire moyenne viscosimétrique (formule de Flory) d'au moins approximativement 40000. Les polymères d'isobutylène présentant des masses moléculaires moyennes viscosimétriques (formule de Flory) inférieurs à approximativement 40000 ne sont pas satisfaisants dans le cas de la présente invention étant donné qu'ils n'assurent pas la résistance nécessaire à l'exposition à haute température requise par la présente invention. On croit que le polymère d'isobutylène transmet des propriétés adhésives aux matériaux de la présente invention tout en faisant fonction de liant. Le polymère d'isobutylène peut être un homopolymère ou un copolymère contenant des quantités relativement faibles de monomères monoéthyléniquement non saturés copolymérisables tel que le styrolène (par exemple jusqu'à approximativement 5% en poids).

On utilise de préférence les homopolymères de polyisobutylène. Les polyisobutylènes préférés utilisés selon les enseignements de la présente invention présentent des masses moléculaires moyennes viscosimétriques (formule de Flory) inférieurs à approximativement 900 000. Un polymère d'isobutylène plus particulièrement approprié est connu sous la marque "Polyisobutylène Vistanex LM/MH" fabriqué par Exxon Chemicals. Ce polyisobutylène présente une masse moléculaire moyenne viscosimétrique (formule de Flory) de l'ordre de 46 000 et une masse moléculaire moyenne viscosimétrique (formule de Staudinger) de l'ordre d'environ 10 000 à environ 11 700. Ce polyisobutylène est un semisolide clair, très visqueux et collant et donné comme moyennement dur par le fabriquant.

Le polymère d'isobutylène est utilisé par quantités de l'ordre d'environ 7 à environ 20% en poids et de préférence, de l'ordre d'environ 15 à environ 20% en poids. On peut, si on le désire, utiliser des mélanges de polymères d'isobutylène.

Un autre élément requis dans la composition du matériau de la présente invention est un copolymère d'une oléfine et d'un ester monoéthyléniquement non saturé. L'oléfine est de l'éthylène et/ou du propylène. L'ester monoéthyléniquement non saturé est un ester de vinyle d'une ester saturé monocarboxylique tel que l'acide acétique ou l'acide propionique et/ou un acrylate d'alcoyl dans lequel le groupe d'alcoyl est du méthyle, de l'éthyle, du butyle ou l'équivalent. Les copolymères recommandés sont les copolymères d'éthylène et d'acétate de vinyle. Les copolymères appropriés aux matériaux de la présente invention contiennent d'environ 18 à environ 40% en poids d'ester monométhyléniquement non saturé. On trouve ces copolymères dans le commerce sous la marque "Elvax" fabriquée par Du Pont. Les copolymères présentent généralement une viscosité inhérente mesurée à 30°C avec 0,25 grammes par 100 millilitres de toluène, de l'ordre de 0,54 à 1,05 et un indice de fusion (Grammes/10 minutes ASTMD—123A) de l'ordre de 2 à 400. On peut, si on le désire utiliser des mélanges de ces copolymères.

Les copolymères sont utilisés dans la composition du matériau de la présente invention par quantités de l'ordre d'environ 10 à environ 40% en poids et de préférence, de l'ordre d'environ 10 à environ 35% en poids. Les quantités recommandées de copolymères sont d'environ 28 à environ 32% en poids.

Les quantités relatives des divers ingrédients indiqués ci-dessus sont basés sur les quantités totales de cire paraffinique et/ou de polyéthylène, de polymère à pouvoir collant, de polymère d'isobutylène et de copolymère d'oléfine, présentes dans les compositions.

En outre, les compositions du matériau de la présente invention peuvent comporter divers agents modificateurs ou auxiliaires tels que des agents plastifiants, stabilisants et de remplissage inertes. Par exemple, les compositions peuvent comprendre jusqu'à approximativement 10% en poids d'un agent de remplissage inerte tel que du dioxyde de titane ou du carbonate de calcium afin d'améliorer les caractéristiques anti-blocage de la composition. Cependant, comme indiqué précédemment, les agents de remplissage inertes ne sont ni nécessaires, ni recommandés. De plus, il peut être souhaitable d'inclure d'environ 0,1 à environ 1,5% en poids et de préférence de l'ordre d'environ 0,25 à environ 1% en poids d'un ou de plusieurs agents antioxydants ou stabilisants. Certains agents anti-oxydants appropriés contiennent du tris (di-t-butyl-p-hydroxybenzyl)-triméthylbenzène disponible dans le commerce sous la marque "Naugawhite", du dibutyldithiocarbomate de zinc connu sous le nom de "Zimate de Butyle", du 4,4'-méthylène bis (2,6-diter-t-butylphényl), du tétrakis ((méthylène-3-(3'5'-diter-t-butyl-4 hydroxyphényl)-propionate) méthane connu sous le nom d'"Irganox 1010", du thiodipriopionate de lauryl stearyle, du dilauryl 3,3'-dithiopriopionate et du thiodipropionate de distearyle et du 2,6 diter-t-butyl-p-crésol. Les agents stabilisants recommandés dans la présente invention sont le thiodipropionate de distearyle et l'Irganox 1010. Il est recommandé d'utiliser des mélanges de ces deux agents stabilisants.

En outre, les compositions des matériaux de la présente invention peuvent comprendre de faibles quantités (par exemple jusqu'à environ 5% en poids) d'un agent plastifiant telle qu'une huile minérale ou de la vaseline.

Le substrat sur lequel les matériaux de la présente invention sont appliqués peut être en polyester du type extrudable tel que le téréphtalate de polyéthylène connu sous la marque "Mylar", des polyéthylènes

4

**O 032 181**

et la cellophane. Les substrats recommandés sont constitués par les polyesters et le polyéthylène. Le substrat présente généralement une épaisseur de l'ordre d'environ 0,0203 mm à environ 0,0381 mm et l'épaisseur totale du matériau de la présente invention et du substrat est généralement d'environ 0,076 mm au maximum. En général, le matériau de la présente invention recouvre le substrat sur une épaisseur d'approximativement 0,0279 mm.

Les éléments composant les matériaux de la présente invention sont mélangés et fondus à une température suffisamment élevée de l'ordre de 120 à 180°C et de préférence de l'ordre de 150°C pour permettre un bon mélange. Le matériau peut alors être appliqué en revêtement en utilisant une technique classique d'application de matériau fondu et chaud, par exemple le pompage du liquide fondu et chaud par un rouleau de revêtement qui applique le matériau sur le substrat se déroulant en contact avec ledit rouleau. Le matériau fondu et chaud se solidifie en refroidissant pour se transformer en une couche homogène sur la surface du substrat. On notera cependant que dans le cas où un élément de remplissage inerte est présent, il s'agira là du seul ingrédient non homogène de la composition. L'ensemble substrat et revêtement peut alors être découpé et enroulé sur une bobine d'alimentation.

Si on le désire, la bande sur sa face arrière, peut présenter une surface non adhérente afin que la couche adhésive n'y adhère pas lors de l'enroulement de ladite bande et plus particulièrement lorsque celle-ci est manipulée à des températures relativement élevées de l'ordre de 60°C. Un revêtement non collant approprié pourrait être choisi parmi les résines de silicium cuites ou être du N-octadécylcarbamate de polyvinyle. Les couches non collantes peuvent être appliquées ou déposées en solution et généralement par quantités pouvant atteindre approximativement 50 mg par m² de substrat.

Les matériaux de la présente invention présentent un pouvoir collant tellement faible que le procédé de test utilisé couramment et appelé le "Test du collage de la balle roulante" ne fournit pas de résultat en dehors de l'échelle. En conséquence, on a testé les matériaux de la présente invention selon le procédé suivant:

des substrats de Mylar d'environ 7,11 mm de large sont revêtus du matériau à tester sur une épaisseur d'environ 0,0279 mm pour faire fonction de bandes d'essai. La bande est pressée, côté adhésif vers le bas, sur une plaque d'acier inoxydable nettoyée à l'acétone, en utilisant un rouleau de caoutchouc de 2.5 kg. Les échantillons sont maintenus ainsi pendant 20 minutes à température ambiante. La force requise en kilogs p pour décoller les échantillons de bande suivant un angle de 180° et à une vitesse de 30,48 cm par minute, est mesurée. Une moyenne de 10 lectures est effectuée.

Les valeurs moyennes courantes des mesures du pouvoir collant du matériau préfére de la présente invention s'échelonnent de 0,01361 à 0,03175 kg. Les matériaux collants et hautement collants du commerce permettant le retrait de caractères imprimés par erreur ont des valeurs courantes de l'ordre de 0,226 kg et plus. Les matériaux préférés présentent une viscosité de Brookfield à 132°C et à 4 tours par minute comprises entre 17000 et 19000 centipoises (17 à 19 Pa.S), approximativement.

Les exemples non limitatifs suivants sont présentés pour mieux illustrer la présente invention.

Exemple 1

Un composition d'approximativement 10% en poids de cire "Gulf Wax 40" (point de fusion autour de 60°C), environ 32% en poids d'un copolymère d'éthylène et d'acétate de vinyle connu sous le nom d'"Elvax 420", environ 43% en poids de polyterpène (Piccolyte S—55, point de ramollissement autour de 55°C) et environ 15% en poids de polyisobutylène (Vistanex LM/MH), est préparée. On ajoute à cette composition 0,5 part de thiodipropionate de distearyle et approximativement 0,5 part de tétrakis (6-méthylène-3-(3',5'-di-t-butyl-4-hydroxyphényl)propionate) méthane. On revêt du matériau ainsi composé un côté d'un film de polyester (Mylar) de 0,0381 mm sur une épaisseur de l'ordre de 0,0279 mm par application à chaud. L'autre côté du substrat de polyester est revêtu d'une couche de polysilicone cuit anti-adhésive.

Le film ains revêtu est enroulé et testé sur une machine à écrire à correction. Les images imprimées sont retirées sans que les fibres du papier soient arrachées. Le matériau présente un faible pouvoir collant compris dans la plage indiquée ci-dessus (c'est-à-dire entre 0,01361 et 0,03175 kg). La composition du matériau donné ici à titre d'exemple est la composition préférée de la présente invention.

Exemple 2

On répète l'exemple 1 avec une composition d'approximativement 10% en poids de cire "Gulf Wax 40", environ 18% en poids de résine polyterpène (Piccolyte S—25, point de ramollissement de l'ordre de 25°C), environ 32% en poids d'une autre résine polyterpène (Piccolyte S—70, point de ramollissement autour de 70°C), environ 30% en poids de copolymère d'éthylène et d'acétate de vinyle (Elvax 210) et environ 10% en poids de polyisobutylène (Vistanex LM/MH). On ajoute à cette composition approximativement 0;5 part en poids de thiodipropionate de distearyle et approximativement 0,5 part en poids de tétrakis (méthylène-3-(3',5'-di-t-butyl-4-hydroxyphényl)propionate méthane.

Les résultats obtenus sont presque similaires à ceux de l'exemple 1 mais ne sont pas tout à fait aussi bons par le fait que les propriétés de retrait à haute température (c'est-à-dire de l'ordre de 50°C) sont inférieures à celles de l'exemple 1 et que le vieillissement des parties exposées de la bande revêtue, est plus rapide. Les propriétés de retrait à température ambiante sont un peu meilleure que dans l'exemple 1 et le matériau est un peu plus collant. Cependant les performances du matériau de l'exemple 2 sont inférieures dans l'ensemble à celles du matériau préféré de l'exemple 1.

5

### Exemple 3

On répète l'exemple 1 avec une composition d'approximativement 10% en poids de cire "Gulf Wax 40", environ 48% en poids de résine polyterpène (Piccolyte S-55), environ 32% en poids de copolymère d'éthylène et d'acétate de vinyle (Elvax 240) et environ 10% en poids de polyisobutylène (Vistanex LM/MH). On ajoute à cette composition approximativement 0,5 part en poids de thiodipropionate de distearyle et approximativement 0,5 part en poids de tétrakis (méthylène-3-(3',5'-di-t-butyl-4-hydroxy-phényl)propionate) méthane.

Les résultats obtenus sont similaires à ceux de l'exemple 1 mais ne sont pas tout à fait aussi bons par le fait que le matériau présente une viscosité de traitement très élevée, mais par contre ses propriétés de retrait à température élevée sont un peu meilleures. Les propriétés du matériau de cet exemple ne sont pas dans l'ensemble aussi bonnes que celles du matériau préféré de l'exemple 1.

### Exemple 4

On répète l'exemple 1 avec une composition d'approximativement 12% en poids de cire "Gulf Wax 40", environ 33% en poids de résine d'hydrocarbure collante (Wingtack 76) et environ 12% en poids d'une autre résine d'hydrocarbure collante (Wingtack 10), environ 35% en poids de copolymère d'éthylène et d'acétate de vinyle (Elvax 210) et environ 8% en poids de polyisobutylène (Vistanex LM/MH). On ajoute à cette composition approximativement 0,5 part en poids de thiodipropionate de distearyle et approximativement 0,5 part en poids de tétrakis (méthylène-3-(3',5'-di-t-butyl-4-hydroxy-phényl)propionate) méthane.

Les résultats obtenus sont similaires à ceux de l'exemple 1 mais dans l'ensemble, ils ne sont pas tout à fait aussi bons. En particulier, le pouvoir collant du matériau obtenu est plus élevé que dans l'exemple 1, ce qui fair qu'à ce point de vue, ce matériau ne se révèle pas entièrement approprié.

### Exemple 5

On répète l'exemple 1 avec une composition d'approximativement 15% en poids d'une cire paraffinique connue dans le commerce sous le nom de "Gulf Wax 55" et présentant un point de fusion de l'ordre de 69°C, environ 35% en poids d'un polyterpène (Zonarez 7070, point de ramollissement autour de 70°C), environ 30% en poids de copolymère d'éthylène et d'acétate de vinyle (Elvax 210) et environ 20% en poids de polyisobutylène (Vistanex LM/MH). On ajoute à cette composition approximativement 0,5 part en poids de thiodipropionate de distearyle et approximativement 0,5 part en poids de tétrakis (méthylène-3-(3',5'-di-t-butyl-4-hydroxyphényl)propionate) méthane.

Les résultats obtenus sont similaires à ceux de l'exemple 1 mais les propriétés de retrait du matériau à température ambiante sont inférieures à celles du matériau préféré de l'exemple 1.

### Exemple 6

On répète l'exemple 1 avec un composition d'approximativement 25% en poids d'une cire paraffinique connue dans le commerce sous le nom de "Gulf Wax 75" et présentant un point de fusion autour de 80°C, environ 33% en poids d'une résine polyterpène (Piccolyte S—55), environ 32% en poids de copolymère d'éthylène et d'acétate de vinyle (Elvax 210) et environ 10% en poids de polyisobutylène (Vistanex LM/MH). On ajoute à cette composition approximativement 0,5 part en poids de thiodipropionate de distearyle et approximativement 0,5 part en poids de tétrakis (méthylène-3-(3',5'-di-t-butyl-4-hydroxy-phényl)propionate) méthane.

Les résultats obtenus sont presque similaires à ceux de l'exemple 1 mais les propriétés de retrait à température ambiante sont inférieures tandis qu'elles sont un peu plus élevées à haute température. Cependant les propriétes de ce matériau ne sont pas dans l'ensemble considérées comme aussi bonnes que celles de l'exemple 1.

**Revendications**

1. Elément de correction par soulèvement, adhésif à froid, pour le retrait de caractères imprimés sur un support, caractérisé en ce qu'il comprend un substrat dont un côté est revêtu d'un matériau comportant:
   a) de 5 à 35% en poids de cire paraffinique, ou de résine de polyéthylène ou d'un mélange de celles-ci,
   b) de 20 à 65% en poids d'un polymère collant hydrocarboné,
   c) de 7 à 25% en poids d'un polymère d'isobutylène collant présentant une masse moléculaire viscosimétrique (formule de Flory) d'au moins 40000, et
   d) de 10 à 48% en poids d'un copolymère d'éthylène et/ou de propylène et d'un ester monoéthyléniquement non saturé dans lequel le copolymère contient de 18 à 40% en poids de cet ester.

2. Elément selon la revendication 1, caractérisé en ce que le polymère collant est un polyterpène.

3. Elément selon la revendication 1 ou 2, caractérisé en ce que le copolymère est un copolymère d'éthylène et d'acétate de vinyle.

4. Elément selon l'une quelconque des revendications 1 à 3, caractérisé en ce qu'il comprend jusqu'à environ 10% en poids d'un agent de remplissage inerte.

5. Elément selon la revendication 4, caractérisé en ce que ledit agent de remplissage inerte est du dioxyde de titane ou du carbonate de calcium ou un mélange de ceux-ci.

6. Elément selon l'une quelconque des revendications 1 à 5, caractérisé en ce qu'il contient d'environ 0,1 à environ 1,5% en poids d'un agent anti-oxydant.

7. Elément selon la revendication 6, caractérisé en ce que l'agent anti-oxydant est un mélange de tétrakis (méthylène-3-(3',5'-di-t-butyl-4-hydroxyphényl)propionate) méthane et de thiodipropionate de distearyle.

8. Elément selon l'une quelconque des revendications 1 à 7, caractérisé en ce que ledit substrat est composé de téréphtalate de polyéthylène, ou de polyéthylène ou de cellulose régénérée.

**Patentansprüche**

1. Anhebekorrekturelement, kalt anhaftend, zum Auslöschen von auf einem Träger aufgedruckten Zeichen, dadurch gekennzeichnet, dass es ein Substrat umfasst, dessen eine Seite mit einem Stoff belegt ist, der folgendes beinhaltet:

a) 5 bis 35 Massenanteile festes Paraffin oder Polyäthylenharz oder eine Mischung dieser beiden Stoffe,

b) 20 bis 65 Massenanteile eines anhaftenden Kohlenwasserstoffpolymers,

c) 7 bis 25 Massenanteile eines anhaftenden Isobutylenpolymers, das eine viskometrische molare Masse (Formel von Flory) von mindestens 40.000 aufweist, und

d) 10 bis 48 Massenteile eines Äthylen- und/oder Propylen-Copolymers und eines monoäthylenisch ungesättigten Esters, in welchem das Copolymer mindestens 18 bis 40 Massenanteile dieses Esters enthält.

2. Element nach Anspruch 1, dadurch gekennzeichnet, dass das anhaftende Polymer ein Polyterpen ist.

3. Element nach Anspruch 1 oder 2, dadurch gekennzeichnet, dass das Copolymer ein Äthylen- und Vinylazetat-Copolymer ist.

4. Element nach einem der Ansprüche 1 bis 3, dadurch gekennzeichnet, das es bis circa 10 Massenanteile eines wirkungslosen Füllermaterials umfasst.

5. Element nach Anspruch 4, dadurch gekennzeichnet, dass es sich bei dem genannten wirkungslosen Füllermaterial um Titandioxid oder um Kalziumkarbonat oder um eine Mischung dieser beiden Stoffe handelt.

6. Element nach einem der Ansprüche 1 bis 5, dadurch gekennzeichnet, dass es circa 0,1 bis circa 1,5 Massenanteile eines Oxydationsinhibitors enthält.

7. Element nach Anspruch 6, dadurch gekennzeichnet, dass der Oxydationsinhibitor aus einer Mischung von Tetrakis (Methylen-3-(3',5'-di-t-butyl-4-Hydroxyphenyl)Propionat) Methan und Distearyl-Thiodipropionat besteht.

8. Element nach einem der Ansprüche 1 bis 7, dadurch gekennzeichnet, dass das genannte Substrat aus Polyäthylen-Terephtalat oder aus Polyäthylen oder aus Regeneratzellulose besteht.

**Claims**

1. A lift-off correction element tacky at room temperatures for removing typed characters from a substrate, characterized in that it comprises a substrate one side of which is coated with a material comprising

a) about 5—35% by weight of paraffinic wax or polyethylene resin or mixtures thereof,

b) about 20—65% by weight of a hydrocarbon tackifying polymer,

c) about 7—25% by weight of a tacky isobutylene polymer having a viscosity average molecular weight (FLORY) of at least 40 000, and

d) about 10—48% by weight of an ethylene and/or propylene copolymer and a monoethylenically unsaturated ester wherein the copolymer contains about 18 to 40% by weight of said ester.

2. The correction element of claim 1 characterized in that tacky polymer is a polyterpene.

3. The correction element of claim 1 or 2 characterized in that the copolymer is a copolymer of ethylene and vinyl acetate.

4. The correction element of any one of claims 1 to 3, characterized in that it contains up to about 10% by weight of an inert filler.

5. The correction element of claim 4 characterized in that said inert filler is titanium dioxide, calcium carbonate or mixtures thereof.

6. The correction element of any one of claims 1 to 5, characterized in that it contains about 0,1 to about 1,5% by weight of an antioxidant.

7. The correction element of claim 6 characterized in that said antioxidant is a mixture of tetrakis [methylene-3-(3',5'-di-t-butyl-4-hydroxyphenyl)propionate] methan and distearyl thio dipropionate.

8. The correction element of any one of claims 1 to 7 characterized in that said substrate is comprised of polyethyleneterephthalate, polyethylene or regenerated cellulose.